# EUROPÄISCHE PATENTSCHRIFT

(11) **EP 3 301 790 B1**
(45) Veröffentlichungstag und Bekanntmachung des Hinweises auf die Patenterteilung: **24.07.2019**
(21) Anmeldenummer: 17001701.6
(22) Anmeldetag: 06.04.2006
(51) Int. Cl.: H02K 9/06, H02K 5/18, H02K 5/22, H02K 9/14, F04D 29/64

(54) **ELEKTROMOTOR**
ELECTRIC MOTOR
MOTEUR ÉLECTRIQUE

(30) Priorität: 12.04.2005 DE 102005016906
(43) Veröffentlichungstag der Anmeldung: 04.04.2018
(62) Teilanmeldung aus: 06724073.9
(73) Patentinhaber: SEW-EURODRIVE GmbH & Co. KG, 76646 Bruchsal (DE)
(72) Erfinder: Tesch, Sven, 76698 Ubstadt-Weiher (DE)

(56) Entgegenhaltungen:
- EP-A1- 0 917 276
- GB-A- 1 248 957
- JP-A- H04 109 845
- JP-A- S52 140 809
- US-A- 2 664 242
- US-A- 4 677 335

## Beschreibung

Die Erfindung betrifft einen Elektromotor.

Motoren mit Lüftern zur Eigenbelüftung und Kühlrippen auf dem Statorgehäuse sind bekannt.

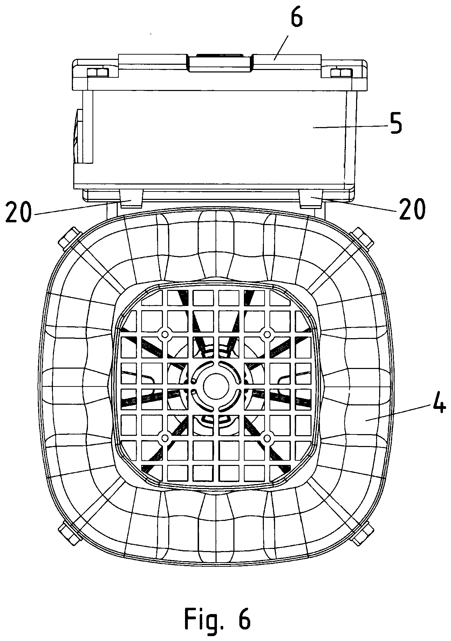

Aus der EP 0 917 276 A1 ist ein Statorgehäuse für Elektromotoren bekannt, bei dem ein Klemmenkasten 10 mit einem von seiner Durchgangsöffnung 20 im Boden 14 abstehenden Stutzen 24 durch eine Durchgangsöffnung 42 im Statorgehäuse 4 greift. Die Durchgangsöffnung verläuft dabei quer zu den Kühlrippen 40 über einen Bereich von mehreren Kühlrippen hinweg (Fig. 6 und Fig. 17). Zur Befestigung des Klemmenkastens sind hülsenförmige Ausformungen 46 vorgesehen, die in Unterbrechungen der Kühlrippen angeordnet sind und die in die Verlängerung der von den Kühlrippen gebildeten, axial verlaufenden Zwischenräume eingreift. Die Durchgangsöffnung und die hülsenförmigen Ausformungen sind an der Oberseite und an den Seiten des Statorgehäuses vorgesehen, so dass ein Klemmenkasten 10 wahlweise an einer oder mehreren der drei Befestigungsstellen am Statorgehäuse befestigt werden kann (Sp. 4, Z. 4-11).

**Aus der** GB 1 248 957 A **ist als nächstliegender Stand der Technik ein verbesserter Elektromotor bekannt. Dieser Elektromotor weist Stator, Kühlrippen und Befestigungsmittel auf, wobei eine Fußplatte mittels der Befestigungsmittel mit dem Stator lösbar verbindbar ist, wobei die Befestigungsmittel am Stator derart angeordnet sind, dass die Fußplatte in zwei Orientierungen am Stator befestigbar ist.**

**Aus der** JP S52 140809 A **ist ein Elektromotor mit einer Lüfterhaube bekannt.**

**Aus der** US 2 664 242 A **ist ein Lüfter ohne Lüfterhaube sondern mit Berührschutzdrahtgittergeflecht bekannt, wobei das Berührschutzdrahtgittergeflecht an einem Kreisring befestigt ist, so dass ein Stapeln der Berührschutzdrahtgittergeflechte derart ermöglicht ist, dass die Ringe der Berührschutzdrahtgittergeflechte aufeinander stapelbar sind.**

Der Erfindung liegt die Aufgabe zugrunde, einen Elektromotor mit verbesserter Kühlung weiterzubilden.

Erfindungsgemäß wird die Aufgabe bei dem Elektromotor nach den in Anspruch 1 angegebenen Merkmalen gelöst.

Hierbei wird unter stromlinienförmig eine Profilgestalt der Kühlrippen mit Verdickungen verstanden, wobei sich die Profilgestalt durch Schnitt der Kühlrippen mit einem koaxialen mathematisch-gedachten Zylinder ergibt. Dabei ist die Profilgestalt stromlinienförmig, so dass ein geringer Strömungswiderstand für den Kühlluftstrom vorhanden ist.

Von Vorteil ist dabei, dass durch die Kühlrippen Luftkanäle bildbar sind, in denen Luft, insbesondere von einem Motorlüfter ausgehend, das Statorgehäuse entlang strömt. Weiter ist die Fußplatte relativ zum Klemmenkasten variabel orientierbar und anbringbar, indem die Fußplatte an einer der drei Seiten montierbar ist. Der Klemmenkasten ist also an einer vierten Seite fest vorsehbar. Dadurch wird vorteilhaft vermieden, dass drei Durchgangsöffnungen, also jeweils eine Durchgangsöffnung an jeder Seite, die Luftströmung entlang der Kühlrippen behindern und insbesondere vom Statorgehäuse radial weg lenken. Die Stromlinienform der Befestigungsmittel bewirkt vorteilhaft, dass die Kühlluft bei Normalbetrieb eines Motorlüfters, also bei Strömungsgeschwindigkeiten von 2 bis 7 m/s, in den Luftkanälen laminar, also mit Reynolds-Zahl zwischen 1200 und 4000 bei einem lichten Abstand der Rippen mit mandelförmigen Verdickungen voneinander von 6 bis 15 mm, strömt. Der lichte Abstand zwischen den Rippen mit mandelförmigen Verdickungen stellt hierfür eine charakteristische, die Geometrie beschreibende Länge dar. Die axiale Länge der verwendbaren Motoren beträgt zwischen 0,1 m und 1 m.

Bei weiteren vorteilhaften Ausgestaltungen sind auch Strömungsgeschwindigkeiten von 1 bis 10 m/s in den Luftkanälen sinnvoll. Auch Reynolds-Zahl zwischen 1000 und 5000 sind vorteilhaft. Der Abstand der Rippen ist auch vorteilhaft von 4 bis 30 mm wählbar.

Bei anderen Strömungsgeschwindigkeiten sind die baulichen Abmaße des Statorgehäuses mit Rippen zur Verwirklichung einer Reynolds-Zahl im Bereich wie oben angegeben entsprechend zu wählen. Bei größeren Strömungsgeschwindigkeiten ist die charakteristische Länge kleiner zu wählen, damit das Produkt aus beiden Größen konstant bleibt, und umgekehrt.

Statt Luft ist auch allgemein ein Kühlmittel, zum Beispiel Wasser, vorsehbar, das in den Luftkanälen strömt. In diesem Fall ist insbesondere die Strömungsgeschwindigkeit und die charakteristische Länge derart anzupassen, dass die Reynolds-Zahl im oben angegebenen Bereich liegt.

Bei einer weiteren vorteilhaften Ausgestaltung formen die Kühlrippen Luftkanäle, in denen Luft, insbesondere von einer Stirnfläche des Statorgehäuses zur anderen, insbesondere laminar, strömt.

Die laminaren Strömungsverhältnisse bewirken überraschenderweise besonders vorteilhaft, dass der Luftstrom die gesamten Statorlänge überstreicht und nicht durch Turbulenzen aus den Luftkanälen und damit vom Statorgehäuse weg geführt wird. Zwar verbessen die Turbulenzen lokal das Kühlverhalten, führen jedoch dazu, dass Teile des Statorgehäuses nicht vom Luftstrom überstrichen werden. Somit wird durch das Auftreten von Turbulenzen überraschenderweise die Kühlleistung herabgesetzt.

Bei einer weiteren vorteilhaften Ausgestaltung sind Verbindungsmittel, wie Schrauben, Niete oder Clipsmittel, zur Verbindung der Fußplatte mit den Befestigungsmitteln derart ausgebildet, dass sie in montierter Lage die Stromlinienform der Kühlrippen nicht verändern. Insbesondere sind in den Befestigungsmitteln Sackbohrungen oder Ausnehmungen vorgesehen, die in der gedachten Ebene durch Kopf und Fuß der Kühlrippen verlaufen und in die die Verbindungsmittel einführbar sind.

Von Vorteil ist dabei, dass durch die Verbindung der Fussplatte mit den Befestigungsmittel keine zusätzliche, den Luftstrom in den Luftkanälen in seiner Strömung behindernden Teile eingebracht werden. Damit wird die Kühlung des Motors verbessert.

Bei einer weiteren vorteilhaften Ausgestaltung sind in den Kühlrippen zusätzliche stromlinienförmige Befestigungsmittel vorgesehen, insbesondere zur Befestigung von Typen- und/oder Leistungsschildern und/oder elektronischen Baugruppen.

Von Vorteil ist dabei, dass zusätzliche Funktionen und/oder elektronische Zusatzfunktionen am Statorgehäuse einfach und sicher anbringbar sind, ohne die laminare Strömung in den Luftkanälen zu stören.

**Erfindungsgemäß** weist die Anordnung der Befestigungsmittel eine zwei-, vier- oder vielzählige Drehsymmetrie auf.

Von Vorteil ist dabei, dass die Fußplatte und/oder Typenschilder und/oder elektronische Baugruppen an einer Seite in verschiedenen Orientierungen montierbar ist.

**Bei einer weiteren vorteilhaften Ausgestaltung werden** drei Kühlrippen, insbesondere in Umfangsrichtung drei aufeinander folgende, umfasst werden, von denen eine erste und eine zweite zur Ausbildung eines ersten Luftkanals und die zweite und dritte zur Ausbildung eines zweiten benachbarten Luftkanals vorgesehen sind, wobei die Kanäle in axialer Richtung verlaufen, und wobei die mittlere, also zweite Kühlrippe Befestigungsmittel umfasst, wobei die Seitenflächen, also die sich axial erstreckenden Flankenflächen, der Kühlrippen zum Vermeiden oder Vermindern von Turbulenzen im jeweiligen Luftkanal stromlinienförmig ausgebildet sind, insbesondere stetig differenzierbar.

Von Vorteil ist dabei, dass ein Luftstrom zwischen den Kühlrippen laminar führbar ist. Besonders vorteilhaft werden durch die stetig differenzierbare Ausbildung der Kühlrippenseitenflächen Turbulenzen vermieden, die ein Ablenken des Luftstroms vom Stator weg und somit eine Minderung der Kühlleistung bewirken würden. Von Vorteil ist dabei weiterhin, dass am Stator ein Klemmenkasten und/oder Gehäuse für elektronische Baugruppen und/oder Fußplatten befestigbar sind, wobei diese in befestigter Lage für die Luftstömung keinen zusätzlichen Strömungswiderstand darstellen.

Bei einer weiteren vorteilhaften Ausgestaltung sind die Luftkanäle als A- und B-Seite, also die Stirnflächen des Statorgehäuses, verbindende, lineare, insbesondere parallel verlaufende, Kanäle ausgebildet, die insbesondere von den Kühlrippen quer zur axialen Richtung begrenzt werden. Insbesondere ist vorteilhaft in dem von den drei Kühlrippen gebildeten Luftkanal Luft laminar von der B-Seite zur A-Seite, oder umgekehrt, durchleitbar.

Hierbei wird unter B-Seite eine Seite des Elektromotors verstanden, auf oder an der ein Lüfter oder eine Strömungsquelle für das Kühlmittel angeordnet ist. Unter A-Seite wird eine Seite des Elektromotors verstanden, auf die das Kühlmittel von der B-Seite zu strömt. A- und B-Seite eines Elektromotors werden vorzugsweise durch die Lage von Lagerschilden beschrieben, die mit den gegenüberliegenden Stirnflächen des Statorgehäuses verbunden sind.

Von Vorteil ist dabei, dass der Luftstrom zur Kühlung die gesamte Länge des Stators überstreicht.

Bei einer weiteren vorteilhaften Ausgestaltung sind keine den Strömungswiderstand erhöhenden Objekte oder Hindernisse in den Luftkanälen vorgesehen, insbesondere nach Befestigung von Vorrichtungen an den Befestigungsmitteln, wobei insbesondere an den Befestigungsmitteln Sackbohrungen vorgesehen sind, die in der gedachten Ebene durch Kopf und Fuß der Kühlrippen verlaufen und in die Verbindungsmittel zur Befestigung einführbar sind.

Von Vorteil ist dabei, dass an den Befestigungsmitteln Vorrichtungen anbringbar sind, ohne dass der Luftstrom in den Luftkanälen behindert wird.

**Bei einer weiteren vorteilhaften Ausgestaltung sind** axial verlaufende gerade Kühlrippen und axial verlaufende Kühlrippen mit Verdickung umfasst, wobei die Verdickungen der Kühlrippen mit Verdickung Befestigungsmittel umfassen, die seitlichen Oberflächen der geraden Kühlrippen an jeder Stelle einen Tangentialvektor definieren, der parallel zur Motorachse liegt, und die Seitenflächen der Kühlrippen stromlinienförmig ausgeführt sind, insbesondere stetig differenzierbar.

Die stetige differenzierbare Ausbildung der Seitenflächen der Kühlrippen, die als mathematisches Ideal innerhalb technischer Toleranzen ausgebildet ist, bewirkt vorteilhaft, dass Knicke, Kanten und/oder Stufen in den Seitenflächen der Kühlrippen vermieden werden. Derartige Knicke, Kanten und/oder Stufen sind aber als Verursacher von Turbulenzen in der Luftströmung bekannt. Die stetig differenzierbare Ausbildung vermeidet somit vorteilhaft das Auftreten derartiger Turbulenzen, führt zur laminaren Strömungsverhältnissen zwischen den Kühlrippen. Somit wird vorteilig ein Ablenken des Luftstroms vom Stator weg vermieden.

Bei einer weiteren vorteilhaften Ausgestaltung erstrecken sich die Kühlrippen über die Länge des Statorgehäuses.

Bei einer weiteren vorteilhaften Ausgestaltung bildet der Tangentialvektor an die Profilgestalt der Kühlrippen mit Verdickung mit der Motorachse einen Winkel von betragsmäßig höchstens 40°, vorzugsweise weniger als 30°.

Dadurch werden vorteilhaft geometrische Formen der Kühlrippen vermieden, die die Entstehung von Turbulenzen in der Luftströmung begünstigen.

**Erfindungsgemäß** ist jede Kühlrippe mit Verdickung von zwei geraden Kühlrippen benachbart.

Von Vorteil ist dabei, dass die Verdickungen nicht von zwei benachbarten Kühlrippen in den gemeinsamen Zwischenraum ragen und somit nicht den Luftstrom ablenken und verwirbeln.

Bei einer weiteren vorteilhaften Ausgestaltung ist die axiale räumliche Ausdehnung der Befestigungsmittel mehr als doppelt so groß wie die Querausdehnung der Befestigungsmittel.

Von Vorteil ist dabei, dass die Befestigungsmittel eine besonders stromlinienförmige Gestalt aufweisen und somit den Luftstrom zwischen den Kühlrippen so wenig wie möglich beeinflussen.

Bei einer weiteren vorteilhaften Ausgestaltung übersteigt die Querausdehnung der Befestigungsmittel den lichten Abstand zu mindestens einer benachbarten Kühlrippe.

Von Vorteil ist dabei, dass die Befestigungsmittel eine große Aufsatzfläche für zu befestigenden Vorrichtungen bieten, insbesondere ist somit eine Fußplatte stabil an das Statorgehäuse anbringbar.

**Bei einer weiteren vorteilhaften Ausgestaltung sind Kühlrippen und Befestigungsmittel vorhanden,** wobei weitere Komponenten, insbesondere Leistungsschild, Fußplatte oder dergleichen, mittels der Befestigungsmittel mit dem Stator lösbar verbindbar sind, und wobei die Befestigungsmittel als Verdickungen von Kühlrippen ausgeführt sind, wobei in den von den Kühlrippen ausgebildeten Luftkanälen keine weiteren Hindernisse, also Strömungswiderstand vergrößernde Objekte und/oder Ausformungen, vorgesehen sind, insbesondere dass der Luftstrom in den Luftkanälen laminar in axialer Richtung strömt und nicht abhebt von den Kühlrippen oder aus dem Raumbereich zwischen den Kühlrippen.

Von Vorteil ist dabei, dass nur geringfügige Aufdickungen in den Kühlrippen genügen, um die Befestigungsmittel aufnehmen zu können. Somit sind in die Kühlrippen selbst Schrauben einschraubbar und die Wärme ist an die angeschraubte weitere Komponente abgebbar. Außerdem ist der von der weiteren Komponente abgedeckte Luftkanal zwischen zwei benachbarten Kühlrippen freihaltbar, indem die Verdickung genügend klein ausgeführt wird. Insbesondere sind Verdickungen derart geformt, dass der Kühlluftstrom entlang der Kühlrippen ungehindert ist oder nur wenig behindert ist infolge der Verdickungen. Von Vorteil ist dabei, dass die Kühlung, also Wärmeabfuhr an die Umgebungsluft verbessert ist und die Leistungsfähigkeit des Motors gesteigert ist, insbesondere die maximal zulässige Leistung.

Bei einer vorteilhaften Ausgestaltung verlaufen die Verdickungen in Richtung der Kühlrippe etwa mandelförmig oder stromlinienförmig und sind in Richtung der Normale der Kühlrippe räumlich weniger ausgedehnt als der Abstand zur nächstbenachbarten Kühlrippe. Von Vorteil ist dabei, dass der Kühlluftstrom möglichst laminar verläuft, also möglichst wenig Turbulenzen entstehen. Kleine Turbulenzen, die quer zur Strömungsrichtung als kleine in sich geschlossene Wirbel verlaufen, werden vom Lüfter schon eingebracht und wirken förderlich für die Kühlung. Die Verdickungen sind derart ausführbar, dass der Kühlluftstrom in Kühlrippenrichtung nicht aufgewirbelt wird und nicht abhebt, also nicht den für die Kühlung entscheidenden Raumbereich zwischen den Kühlrippen verlässt. Der mandelförmige FormVerlauf der Oberfläche in Kühlrippenrichtung ist stetig differenzierbar.

**Erfindungsgemäß** liegen mindestens einige der Befestigungsmittel in einer Ebene. Von Vorteil ist dabei, dass eben ausgeführte, weitere Komponenten anschraubbar sind.

**Erfindungsgemäß** liegen mindestens vier der Befestigungsmittel in einer Ebene. Von Vorteil ist dabei, dass eine Fußplatte lösbar verbindbar ist und der Motor stabil an einer solchen Montageplatte anmontierbar ist.

**Erfindungsgemäß** sind die Verdickungen in Richtung der Normale der Kühlrippe räumlich weniger ausgedehnt als der halbe Abstand zur nächstbenachbarten Kühlrippe zur Verkleinerung des Einflusses auf die Kühlluftströmung. Von Vorteil ist dabei, dass der Kühlluftstrom innerhalb der Rippen strömt.

Bei einer vorteilhaften Ausgestaltung umfassen die Verdickungen Sacklochbohrungen oder Zentrierhilfen, die beispielsweise als konische Ausnehmungen ausgeformt sind. Von Vorteil ist dabei, dass einfache und kostengünstige Befestigungsmittel vorsehbar sind.

**Erfindungsgemäß** liegen mindestens vier erste der Befestigungsmittel in einer ersten Ebene und mindestens vier zweite der Befestigungsmittel in einer zweiten Ebene, die senkrecht zur ersten Ebene angeordnet ist. Von Vorteil ist dabei, dass der Motor in verschiedenen Orientierungen montierbar ist.

Bei einer vorteilhaften Ausgestaltung sind zwei Befestigungsmittel für die lösbare Verbindung mit einem Leistungsschild und vier weitere Befestigungsmittel für die lösbare Verbindung mit einer Fußplatte, also Montageplatte, vorgesehen, insbesondere im Bereich der ersten Ebene. Von Vorteil ist dabei, dass das Leistungsschild oder die Fußplatte wahlweise verbindbar sind.

Weitere Vorteile ergeben sich aus den Unteransprüchen.

Die Erfindung wird nun anhand von Abbildungen näher erläutert:

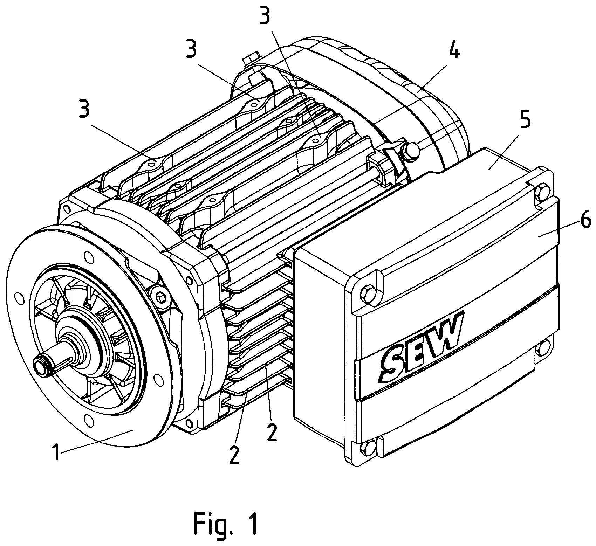

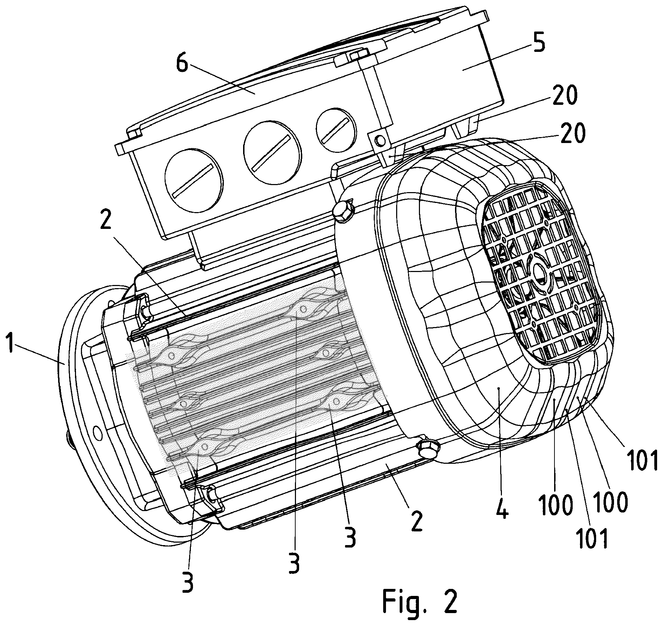

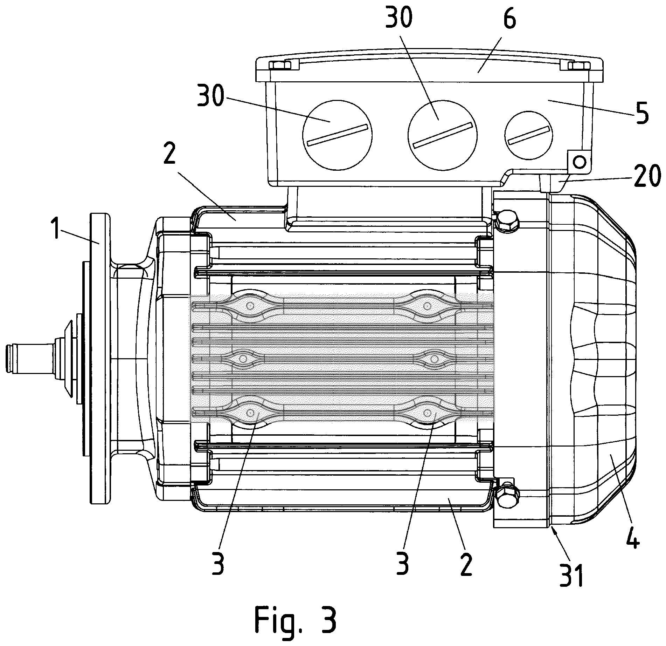

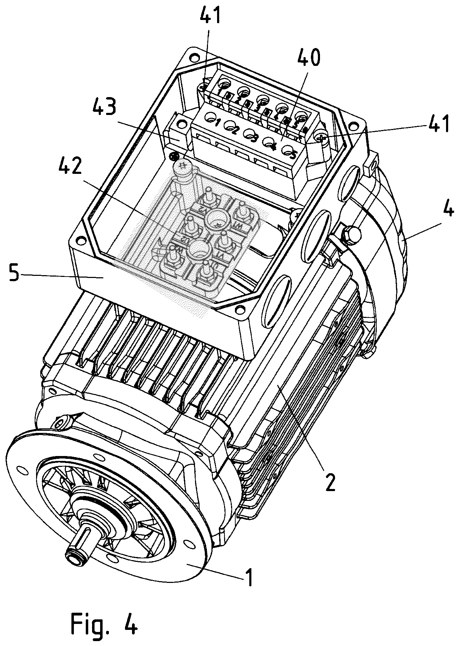

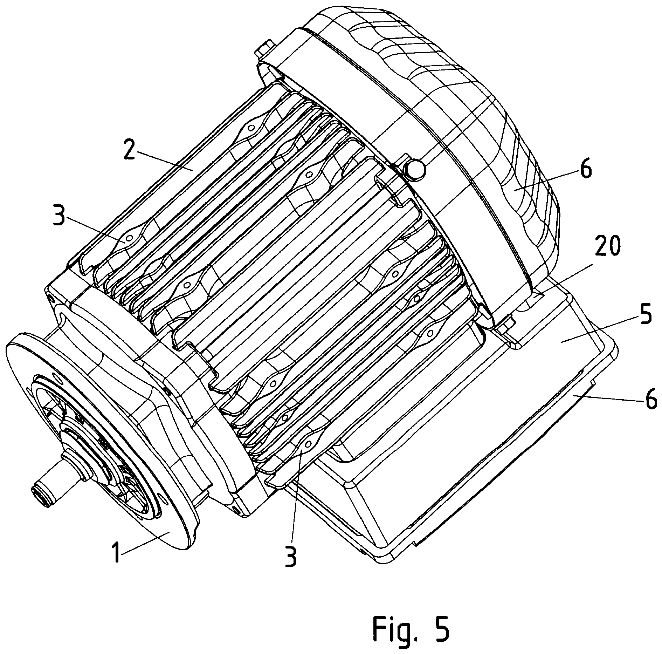

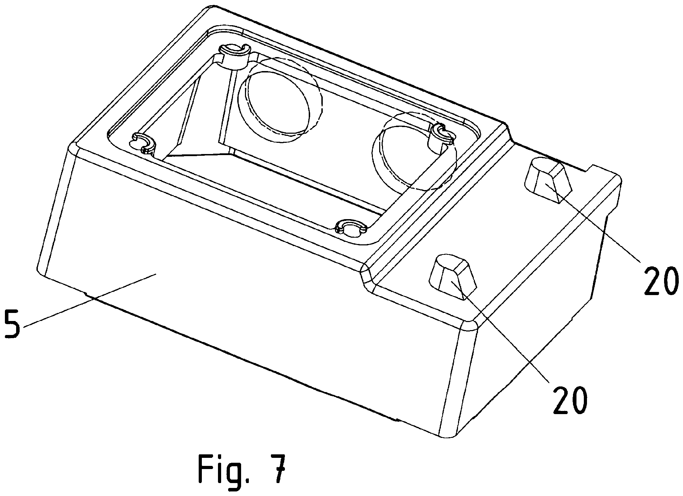

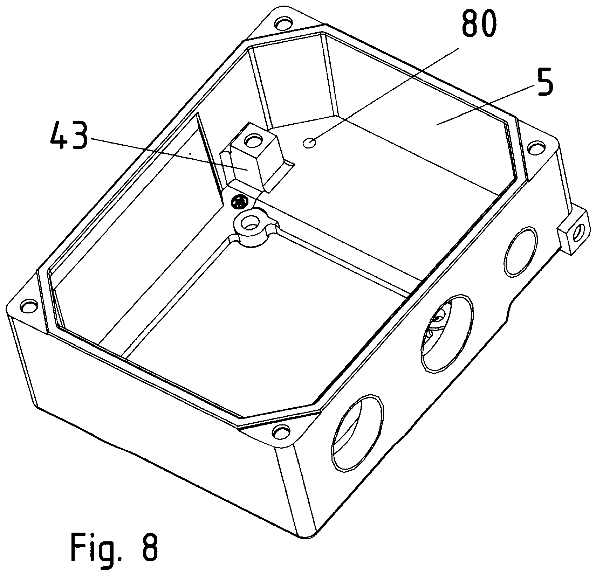

In den Figuren 1 bis 6 ist ein erfindungsgemäßer Elektromotor in verschiedenen Ansichten gezeigt. Das Unterteil des zugehörigen Anschlusskastens ist in den Figuren 7 und 8 in verschiedenen Ansichten gezeigt.

Der Motor ist als Elektromotor ausgeführt und weist einen Flansch 1 auf, mit welchem eine weitere anzutreibende Vorrichtung, wie Getriebe oder Rührgerät, anschließbar ist.

An seinem Statorgehäuse weist der Motor Kühlrippen 2 auf, die teilweise mandelförmige Verdickungen 3 aufweisen. Die Lüfterhaube 4 ist auf der dem Flansch 1 gegenüberliegenden Seite vorgesehen. Der auch als Klemmenkasten bezeichenbare Anschlusskasten ist aus einem Anschlusskastenunterteil 5 und einem mit diesem lösbar verbindbarem Anschlusskastenoberteil 6 als Deckel zusammengesetzt. Das Anschlusskastenunterteil 5 weist an seiner äußeren, dem Statorgehäuse des Motors zugewandten Seite Nocken 20 auf, die Materialanhäufungen zum Einbringen einer Bohrung darstellen.

Da die Teile des Motors, insbesondere aber die gehäusebildenden Teile des Motors, möglichst materialsparend ausgeführt sind, ist das Einbringen einer Bohrung im Gehäuse nicht einfach und stabil möglich. Daher bieten die Nocken 20 Materialverdickungen, in welche die Bohrlöcher 80 vom Inneren des Anschlusskastenunterteils aus einbringbar sind. Die Form der Nocken ist haifischflossenartig. Die Nocken sind zum Motor hin gerichtet vorgesehen an der Anschlusskastenunterseite. Ohne schräge Seite wäre die Festigkeit nicht genügend groß. Die haifischflossenartige Ausprägung ermöglicht bei geringfügig mehr Materialverbrauch als für die Bohrung 80 notwendig wäre eine hohe Festigkeit. Eine weitere Fläche, die schräg verlaufen würde, würde den Materialverbrauch weiter erhöhen, hätte aber keine entsprechend große festigkeitserhöhende Wirkung. Das Bohrloch 80 ist als vorgegossenes Sackloch ausgeführt. Es ist nur Material um das Bohrloch 80 herum verwendet, so dass die minimale Menge an Material verbraucht ist, wobei nur eine schräg verlaufende Seite zur Erhöhung der Festigkeit unter geringem Materialverbrauch vorgesehen ist.

Das Anschlusskastenunterteil 5 umfasst in seiner Gehäusewand Kabel-Verschraubungen 30 zum Durchführen von Kabeln. Der von diesen umfasste Schutzleiter wird an der Schutzleiteranschlussvorrichtung 43 verbunden.

Der Gleichrichterbaustein 40 ist als Option mit den Befestigungsschrauben 41 im Anschlusskastenunterteil 5 befestigt.

Das Klemmbrett 42 dient zumindest zur Verbindung der durch die Kabel-Verschraubungen 30 geführten Versorgungsleitungen mit den Wicklungsdrähten des Stators.

Die Lüfterhaube 4 weist an ihrem Umfang in Umfangsrichtung einander abwechselnde Erhöhungen 100 und Vertiefungen 101 auf, also wellenförmige Einprägungen in Umfangsrichtung im Ansaugbereich der Lüfterhaube. Auf diese Weise sind Geräuschabstrahlungen vermindert und zusätzlich ist die Steifigkeit der Lüfterhaube 4 erhöht. Die Lüfterhaube 4 weist zusätzlich einen umlaufenden Stapelrand 31 auf. Mittels diesem Stapelrand 31 sind die Hauben 4 im Lager platzsparend stapelbar. Der Stapelrand wirkt zusätzlich versteifend auf die Lüfterhaube 4.

Die mandelförmigen Verdickungen 3 sind als Aufdickung der Kühlrippen am Statorgehäuse ausgeführt für die Befestigung des Typenschildes, also Leistungsschildes, oder beispielsweise an einer anderen Seite für die Befestigung einer Fußplatte, auf der der Motor montierbar ist. Die mandelförmigen Verdickungen 3 sind dazu innerhalb einer Ebene angeordnet. Insbesondere vier hiervon jeweils sind zusammengehörend. Die Mandelform ist derart ausgeführt, dass sie die Strömung der Kühlluft zwischen zwei benachbarten Kühlrippen möglichst wenig behindern. Dazu sind sie etwa stromlinienförmig oder entsprechend mandelförmig verlaufend entlang der Kühlrippen. Die Kühlrippen sind also in diesen Bereichen nur etwas aufgedickt. Vorteiligerweise ist also der Motor besser entwärmt als im Stand der Technik. Denn es gibt keine Aufdickung, die den Luftstrom zwischen zwei Kühlrippen entlang der Kühlrippen behindert. Keine der Aufdickungen verbindet gar zwei benachbarte Kühlrippen. Statt eine Sacklochbohrung einzubringen, ist es auch vorteilhaft, bei der Fertigung zunächst nur konische Ausnehmungen als Zentrierhilfe einzubringen. Nur wenn dann bei der Montage des Motors wirklich eine Bohrung vorgesehen werden soll, wird eine solche eingebracht. Dann ist aber das Bohrwerkzeug einfach zentriert und der Ort der Bohrung schon vormarkiert.

Die Bohrlöcher sind bei weiteren erfindungsgemäßen Ausführungsbeispielen als Sacklochbohrungen ausgeführt.

Diejenigen Verdickungen, welche für die Befestigung der Fußplatte verwendbar sind, weisen bei weiteren erfindungsgemäßen Ausführungsbeispielen eine kegelförmige Vertiefung im Bereich des Bohrloches auf als Zentrierhilfe beim Einschrauben der Befestigungsschrauben.

Statt des Gleichrichterbausteins 40 sind bei weiteren erfindungsgemäßen Ausführungsbeispielen auch andere elektronische Schaltungen, wie Motorstarter oder Sanftanlaufgeräte oder Umrichter und Steuerschaltungen, oder Anschlussvorrichtungen, wie Klemmenleisten oder Haltevorrichtungen, wie Tragschienen oder dergleichen, verbindbar.

### Bezugszeichenliste

1 Flansch
2 Kühlrippe
3 mandelförmige Verdickung
4 Lüfterhaube
5 Anschlusskastenunterteil
6 Anschlusskastenoberteil
20 Nocken
30 Kabel-Verschraubung
31 Stapelrand
40 Gleichrichterbaustein als Option
41 Befestigungsschrauben für Option
42 Klemmbrett
43 Schutzleiteranschlussvorrichtung
80 Bohrloch in Nocke
100 Erhöhung
101 Vertiefung

## Patentansprüche

1. Elektromotor mit Stator, Lüfterhaube (4) und Kühlvorrichtung,
wobei die Kühlvorrichtung axial verlaufende gerade Kühlrippen (2) und axial verlaufende Kühlrippen (2) mit Verdickung (3) aufweist,
wobei die Verdickungen (3) der Kühlrippen (2) mit Verdickung (3) Befestigungsmittel umfassen,
wobei die seitlichen Oberflächen der geraden Kühlrippen (2) an jeder Stelle einen Tangentialvektor definieren, der parallel zur Motorachse liegt,
und die Seitenflächen der Kühlrippen (2) stromlinienförmig ausgeführt sind,
wobei jede Kühlrippe (2) mit Verdickung (3) von zwei geraden Kühlrippen (2) benachbart ist,
wobei eine Fußplatte, auf welcher der Elektromotor montierbar ist, mittels der Befestigungsmittel mit dem Stator lösbar verbindbar ist,
**wobei** die Befestigungsmittel als stromlinienförmige Verdickungen (3) der Kühlrippen (2) ausgeführt sind,
wobei die Befestigungsmittel am Stator derart angeordnet sind, dass die Fußplatte in mindestens zwei Orientierungen am Stator befestigbar ist,
wobei in den von den axial verlaufenden geraden Kühlrippen (2) und den axial verlaufenden Kühlrippen (2) mit Verdickung (3) gemeinsam ausgebildeten Luftkanälen keine weiteren Hindernisse, also Strömungswiderstand vergrößernden Objekte und/oder Ausformungen, vorgesehen sind, und der Luftstrom in den Luftkanälen laminar in axialer Richtung von einer Stirnfläche des Stators zur anderen strömt und nicht abhebt von den Kühlrippen (2) oder aus dem Raumbereich zwischen den Kühlrippen (2),
wobei vier der Befestigungsmittel, deren Anordnung eine zwei- oder vierzählige Drehsymmetrie aufweist, in einer ersten Ebene liegen,
wobei vier weitere Befestigungsmittel, deren Anordnung eine zwei- oder vierzählige Drehsymmetrie aufweist, in einer zweiten Ebene liegen, die senkrecht zur ersten Ebene angeordnet ist,
wobei die Lüfterhaube (4) an ihrem Umfang in Umfangsrichtung einander abwechselnde Erhöhungen (100) und Vertiefungen (101) aufweist, also wellenförmige Einprägungen im Ansaugbereich der Lüfterhaube (4),
wobei die Lüfterhaube einen umlaufenden Stapelrand (31) aufweist,
**wobei die Verdickungen (3) in Richtung der Normale der Kühlrippe (2) räumlich weniger ausgedehnt sind als der halbe Abstand zur nächstbenachbarten Kühlrippe** (2) **zur Verkleinerung des negativen Einflusses auf die Kühlluftströmung.**

2. Elektromotor nach Anspruch 1,
**dadurch gekennzeichnet, dass**
die Befestigungsmittel am Stator derart angeordnet sind, dass die Fußplatte in drei Orientierungen am Stator befestigbar ist.

3. Elektromotor nach Anspruch 1,
**dadurch gekennzeichnet, dass**
die Befestigungsmittel am Stator derart angeordnet sind, dass die Fußplatte in mindestens zwei unterschiedlichen Richtungen der Normalen der Fußplatte am Stator befestigbar ist.

4. Elektromotor nach einem der Ansprüche 1 bis 3,
**dadurch gekennzeichnet, dass**
die Verbindungsmittel zur Verbindung der Fußplatte mit den Befestigungsmitteln in montierter Lage die Stromlinienform der Kühlrippen (2) nicht verändern.

5. Elektromotor nach Anspruch 4,
**dadurch gekennzeichnet, dass**
in den Befestigungsmitteln Sackbohrungen vorgesehen sind, die in der gedachten Ebene durch Kopf und Fuß der Kühlrippen (2) verlaufen und in die die Verbindungsmittel einführbar sind.

6. Elektromotor nach einem der Ansprüche 1 bis 3,
**dadurch gekennzeichnet, dass**
in den Kühlrippen (2) zusätzliche stromlinienförmige Befestigungsmittel vorgesehen sind.

7. Elektromotor nach Anspruch 6,
**dadurch gekennzeichnet, dass**
die zusätzliche stromlinienförmige Befestigungsmittel zur Befestigung von Typen- und/oder Leistungsschildern und/oder Elektronischen Baugruppen dienen.

8. Elektromotor nach einem der Ansprüche 1 bis 3,
**dadurch gekennzeichnet, dass**
weitere Komponenten mittels der Befestigungsmittel mit dem Stator lösbar verbindbar sind.

9. Elektromotor nach Anspruch 8,
**dadurch gekennzeichnet, dass**
die weitere Komponenten **ein** Leistungsschild umfassen.

10. Elektromotor nach einem der Ansprüche 1 bis 9,
**dadurch gekennzeichnet, dass**
die Verdickungen (3) in Richtung der Kühlrippe (2) etwa mandelförmig oder stromlinienförmig verlaufen und in Richtung der Normale der Kühlrippe (2) räumlich weniger ausgedehnt sind als der Abstand zur nächstbenachbarten Kühlrippe (2).

11. Elektromotor nach einem der Ansprüche 1 bis 10, **dadurch gekennzeichnet, dass**
die Verdickungen (3) Sacklochbohrungen und/oder Zentrierhilfen umfassen.

12. Elektromotor nach einem der Ansprüche 1 bis 11,
**dadurch gekennzeichnet, dass** zwei Befestigungsmittel für die lösbare Verbindung mit dem Leistungsschild und vier weitere Befestigungsmittel für die lösbare Verbindung mit der Fußplatte, also Montageplatte, vorgesehen sind.

13. Elektromotor nach Anspruch 12,
**dadurch gekennzeichnet, dass**
die zwei Befestigungsmittel für die lösbare Verbindung mit einem Leistungsschild weisen Sacklochbohrung auf.

14. Elektromotor nach einem der Ansprüche 1 bis 13,
**dadurch gekennzeichnet, dass**
die vier weiteren Befestigungsmittel für die lösbare Verbindung mit einer Fußplatte, also Montageplatte, Zentrierhilfen für ein Werkzeug aufweisen.

15. Elektromotor nach einem der Ansprüche 1 bis 14,
**dadurch gekennzeichnet, dass**
die zwei Befestigungsmittel und die vier weitere Befestigungsmittel im Bereich der ersten Ebene vorgesehen sind.

## Claims

1. Electric motor comprising a stator, a fan cowl (4) and a cooling device,
wherein the cooling device has axially extending straight cooling ribs (2) and axially extending cooling ribs (2) having thickened portions (3),
wherein the thickened portions (3) of the cooling ribs (2) having thickened portions (3) comprise attachment means,
wherein, at every point, the lateral surfaces of the straight cooling ribs (2) define a tangential vector that is parallel to the motor axis,
and the side faces of the cooling ribs (2) are configured in a streamlined manner,
wherein two straight cooling ribs (2) are adjacent to each cooling rib (2) having thickened portions (3),
wherein a base plate on which the electric motor can be mounted can be releasably connected to the stator by means of the attachment means,
wherein the attachment means are configured as streamlined thickened portions (3) of the cooling ribs (2),
wherein the attachment means are arranged on the stator in such a way that the base plate can be attached to the stator in at least two orientations,
wherein no additional obstructions, in other words no objects and/or mouldings that increase the flow resistance, are provided in the air channels, which are formed jointly by the axially extending straight cooling ribs (2) and the axially extending cooling ribs (2) having the thickened portions (3), and the air stream flows from one end face of the stator to the other in the axial direction in a laminar manner and does not lift off from the cooling ribs (2) or from the spatial region between the cooling ribs (2),
wherein four of the attachment means, the arrangement of which has two-fold or four-fold rotational symmetry, are positioned in a first plane,
wherein four additional attachment means, the arrangement of which has two-fold or four-fold rotational symmetry, are positioned in a second plane arranged perpendicularly to the first plane,
wherein the fan cowl (4) has projections (100) and recesses (101) on its circumference that alternate in the circumferential direction, in other words undulating embossments in the suction region of the fan cowl (4),
wherein the fan cowl has a circumferential stacking edge (31),
wherein, in the direction of the normal of the cooling rib (2), the thickened portions (3) have a smaller spatial extension than half the distance to the closest cooling rib (2) so as to reduce the negative impact on the cooling air flow.

2. Electric motor according to claim 1,
**characterised in that**
the attachment means are arranged on the stator in such a way that the base plate can be attached to the stator in three orientations.

3. Electric motor according to claim 1,
**characterised in that**
the attachment means are arranged on the stator in such a way that the base plate can be attached to the stator in at least two different directions of the normals of the base plate.

4. Electric motor according to any of claims 1 to 3,
**characterised in that**
the connection means for connecting the base plate to the attachment means when in the mounted position do not alter the streamlined shape of the cooling ribs (2).

5. Electric motor according to claim 4,
**characterised in that**
blind holes are provided in the attachment means, which holes extend in the imaginary plane through the top and bottom of the cooling ribs (2) and into which the connection means can be inserted.

6. Electric motor according to any of claims 1 to 3,
**characterised in that**
additional streamlined attachment means are provided in the cooling ribs (2).

7. Electric motor according to claim 6,
**characterised in that**
the additional streamlined attachment means are used to attach nameplates and/or rating plates and/or electronic modules.

8. Electric motor according to any of claims 1 to 3,
**characterised in that**
additional components can be releasably connected to the stator by means of the attachment means.

9. Electric motor according to claim 8,
**characterised in that**
the additional components comprise a rating plate.

10. Electric motor according to any of claims 1 to 9,
**characterised in that**
in the direction of the cooling rib (2), the thickened portions (3) extend in an approximately amygdaline or streamlined manner and have a smaller spatial extension in the direction of the normal of the cooling rib (2) than the distance to the closest cooling rib (2).

11. Electric motor according to any of claims 1 to 10,
**characterised in that**
the thickened portions (3) comprise blind holes and/or centring aids.

12. Electric motor according to any of claims 1 to 11,
**characterised in that**
two attachment means are provided for the releasable connection to the rating plate and four additional attachment means are provided for the releasable connection to the base plate, i.e. the mounting plate.

13. Electric motor according to claim 12,
**characterised in that**
the two attachment means for the releasable connection to a rating plate have blind holes.

14. Electric motor according to any of claims 1 to 13,
**characterised in that**
the four additional attachment means for the releasable connection to a base plate, i.e. a mounting plate, have centring aids for a tool.

15. Electric motor according to any of claims 1 to 14,
**characterised in that**
the two attachment means and the four additional attachment means are provided in the region of the first plane.

## Revendications

1. Moteur électrique muni d'un stator, d'un capot de ventilateur (4) et d'un dispositif de refroidissement,
sachant que le dispositif de refroidissement présente des ailettes de refroidissement (2) s'étendant axialement et rectilignes et des ailettes de refroidissement (2) s'étendant axialement et munies d'un renflement (3),
sachant que les renflements (3) des ailettes de refroidissement (2) munies d'un renflement (3) comprennent des moyens de fixation,
sachant que les surfaces latérales des ailettes de refroidissement rectilignes (2) définissent en tout point un vecteur tangentiel qui est parallèle à l'axe du moteur,
et que les faces latérales des ailettes de refroidissement (2) sont réalisées aérodynamiques,
sachant que chaque ailette de refroidissement (2) munie d'un renflement (3) est voisine de deux ailettes de refroidissement rectilignes (2),
sachant qu'une plaque de base, sur laquelle peut être monté le moteur électrique, peut être reliée de manière détachable au stator à l'aide des moyens de fixation,
sachant que les moyens de fixation sont réalisés sous la forme de renflements aérodynamiques (3) des ailettes de refroidissement (2),
sachant que les moyens de fixation sont disposés sur le stator de telle sorte que la plaque de base peut être fixée sur le stator dans au moins deux orientations,
sachant qu'aucun autre obstacle, donc des objets et/ou conformations augmentant la résistance à l'écoulement, n'est prévu dans les canaux d'air conjointement formés par les ailettes de refroidissement (2) s'étendant axialement et rectilignes et les ailettes de refroidissement (2) s'étendant axialement et munies d'un renflement (3), et que le flux d'air s'étend de façon laminaire en direction axiale dans les canaux d'air d'une face frontale du stator à l'autre et ne se décolle pas des ailettes de refroidissement (2) ou encore ne quitte pas la région spatiale entre les ailettes de refroidissement (2),
sachant que quatre des moyens de fixation, dont la disposition présente une symétrie rotationnelle binaire ou quaternaire, se situent dans un premier plan,
sachant que quatre autres moyens de fixation, dont la disposition présente une symétrie rotationnelle binaire ou quaternaire, se situent dans un deuxième plan qui est disposé perpendiculairement au premier plan,
sachant que le capot de ventilateur (4) présente sur sa périphérie des rehaussements (100) et des renfoncements (101) alternant entre eux en direction périphérique, donc des régions repoussées ondulées dans la zone d'aspiration du capot de ventilateur (4), sachant que le capot de ventilateur présente un rebord d'empilage entourant (31),
sachant que les renflements (3) sont, dans la direction de la normale de l'ailette de refroidissement (2), spatialement moins étendus que la moitié de la distance par rapport à l'ailette de refroidissement (2) immédiatement voisine, afin de diminuer l'influence négative sur l'écoulement de l'air de refroidissement.

2. Moteur électrique selon la revendication 1, **caractérisé en ce que** les moyens de fixation sont disposés sur le stator de telle sorte que la plaque de base peut être fixée sur le stator dans trois orientations.

3. Moteur électrique selon la revendication 1, **caractérisé en ce que** les moyens de fixation sont disposés sur le stator de telle sorte que la plaque de base peut être fixée sur le stator dans au moins deux directions différentes de la normale de la plaque de base.

4. Moteur électrique selon l'une des revendications 1 à 3, **caractérisé en ce que** les moyens de liaison destinés à relier la plaque de base aux moyens de fixation, en position montée, ne modifient pas la forme aérodynamique des ailettes de refroidissement (2).

5. Moteur électrique selon la revendication 4, **caractérisé en ce que** des perçages borgnes sont prévus dans les moyens de fixation, perçages qui s'étendent dans le plan imaginaire passant par la tête et le pied des ailettes de refroidissement (2) et dans lesquels les moyens de liaison peuvent être introduits.

6. Moteur électrique selon l'une des revendications 1 à 3, **caractérisé en ce que** des moyens de fixation aérodynamiques supplémentaires sont prévus dans les ailettes de refroidissement (2).

7. Moteur électrique selon la revendication 6, **caractérisé en ce que** les moyens de fixation aérodynamiques supplémentaires servent à la fixation de plaques d'identification et/ou signalétiques et/ou de modules électroniques.

8. Moteur électrique selon l'une des revendications 1 à 3, **caractérisé en ce que** d'autres éléments peuvent être reliés de manière détachable au stator à l'aide des moyens de fixation.

9. Moteur électrique selon la revendication 8, **caractérisé en ce que** les autres éléments comprennent une plaque signalétique.

10. Moteur électrique selon l'une des revendications 1 à 9, **caractérisé en ce que** les renflements (3) s'étendent approximativement en méandres ou de façon aérodynamique dans la direction de l'ailette de refroidissement (2) et sont, dans la direction de la normale de l'ailette de refroidissement (2), spatialement moins étendus que la distance par rapport à l'ailette de refroidissement (2) immédiatement voisine.

11. Moteur électrique selon l'une des revendications 1 à 10, **caractérisé en ce que** les renflements (3) comprennent des perçages borgnes et/ou des aides au centrage.

12. Moteur électrique selon l'une des revendications 1 à 11, **caractérisé en ce que** deux moyens de fixation sont prévus pour la liaison détachable avec la plaque signalétique, et quatre autres moyens de fixation pour la liaison détachable avec la plaque de base, donc la plaque de montage.

13. Moteur électrique selon la revendication 12, **caractérisé en ce que** les deux moyens de fixation pour la liaison détachable avec une plaque signalétique présentent un perçage borgne.

14. Moteur électrique selon l'une des revendications 1 à 13, **caractérisé en ce que** les quatre autres moyens de fixation pour la liaison détachable avec une plaque de base, donc une plaque de montage, présentent des aides au centrage pour un outil.

15. Moteur électrique selon l'une des revendications 1 à 14, **caractérisé en ce que** les deux moyens de fixation et les quatre autres moyens de fixation sont prévus dans la région du premier plan.
